# FASCICULE DE BREVET EUROPEEN

(11) **EP 1 038 844 B1**
(45) Date de publication et mention de la délivrance du brevet: **08.06.2005**
(21) Numéro de dépôt: 00400773.8
(22) Date de dépôt: 21.03.2000
(51) Int. Cl.: C03B 9/32

(54) **Procédé et dispositif de formage d'objets en verre creux, objets obtenus**
Verfahren und Vorrichtung zur Herstellung von Hohlglasgegenständen und hergestellte Gegenstände
Method and apparatus for making hollow glassware and objects made thereof

(30) Priorité: 25.03.1999 FR 9903719
(43) Date de publication de la demande: 27.09.2000
(73) Titulaire: SAINT-GOBAIN EMBALLAGE, 92400 Courbevoie (FR)
(72) Inventeur: Badin, Rémy, 76910 Criel (FR); Fosse, Lucien, 76260 Etalondes (FR)
(74) Mandataire: Le Cam, Stéphane Georges Elie

(56) Documents cités:
- WO-A-99/42411
- US-A- 3 734 703
- US-A- 3 776 711

## Description

La présente invention est relative à un procédé de formage d'un objet en verre creux tel qu'une bouteille, un flacon, un pot... et à un dispositif de mise en oeuvre d'un tel procédé.

Bien qu'elle ne soit pas limitée à une telle application, l'invention sera plus particulièrement décrite en référence à une utilisation en tant que moule finisseur d'une machine I.S.

Les procédés classiques et largement employés à l'heure actuelle pour fabriquer les flacons mettent en oeuvre des machines dites IS et sont connus sous les désignations de procédés « soufflé-soufflé » et « pressé-soufflé ».

Ces procédés peuvent être décomposés en plusieurs étapes. On décrit, ci-après, le procédé « soufflé-soufflé » qui est le plus répandu :
■ *le chargement* : une goutte de verre ou paraison entre sous l'effet de son propre poids dans un premier moule (ébaucheur), par l'extrémité supérieure de celui-ci, correspondant au fond du flacon ;
■ *la compression* : après le chargement, un fond ébaucheur vient former le moule ébaucheur ; puis on effectue un soufflage d'air comprimé dans le moule ébaucheur par l'intermédiaire du fond ébaucheur pour forcer le verre à bien pénétrer dans la partie inférieure du moule, qui correspond à la bague du futur article ; de plus cette compression assure un bon contact thermique entre le verre et le moule ;
■ *le perçage* : un poinçon, de dimensions réduites, occupant approximativement la hauteur de la bague et fermant le bas du moule ébaucheur, se retire vers le bas, laissant place à une alimentation en air comprimé qui chasse devant lui le verre chaud moins visqueux situé au voisinage de l'axe du moule ébaucheur, le verre froid plus visqueux qui a été refroidi au contact du moule restant, quant à lui, en place ; une ébauche du futur article est ainsi obtenue ;
■ *le transfert* : lorsque l'ébauche s'est suffisamment refroidie dans le moule ébaucheur pour pouvoir être manipulée, elle est transférée dans un second moule (finisseur) qui a la forme de l'article final ;
■ *l'allongement et le soufflage* : une fois placée dans le moule finisseur, on laisse l'ébauche s'allonger un certain temps avant de la souffler pour lui donner la forme du flacon ; cette étape d'allongement permet de bien répartir le verre ;
■ *l'extraction* : au contact du moule finisseur, le verre se refroidit rapidement et, quand sa viscosité est suffisamment basse, le flacon est extrait du moule finisseur.

Un tel procédé permet de fabriquer un très grand nombre de formes de flacons, qu'elles soient axisymétriques ou non.

Les flacons peuvent être classés, de manière non limitative, en deux catégories, notamment en fonction de la nature du liquide qu'ils contiennent :
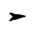 d'une part, ceux dont la bague comporte un filet et qui sont fermés par un bouchon ;
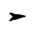 d'autre part, ceux dont la bague est dépourvue de filet et qui sont munis d'un vaporisateur serti sur le haut de la bague et fermés par un capuchon.

Récemment, certains parfumeurs ont demandé à ce qu'une nouvelle forme de flacon appartenant à la deuxième catégorie ci-dessus soit réalisée.

Il s'agit de réaliser un flacon aux caractéristiques suivantes :
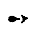 l'enveloppe extérieure, c'est-à-dire la partie en verre prolongée par l'enveloppe du capuchon, doit être inscrite dans une sphère de diamètre donnée ;
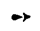 la bague doit présenter une large ouverture, c'est-à-dire avoir un diamètre important par rapport à celui de la sphère.

Un tel flacon et, en particulier la partie en verre, ne peut être réalisé de manière conventionnelle.

En effet, de par ce qui précède, le vaporisateur qui doit être serti autour de la bague est nécessairement de grandes dimensions. Cela ne permet pas au capuchon en forme de calotte sphérique de s'inscrire dans le prolongement de la partie sphérique du corps en verre.

Le diamètre de la bague et les dimensions du vaporisateur étant imposés par le parfumeur, les inventeurs se sont alors fixé pour but de proposer un procédé de formage de la partie en verre qui permette d'obtenir le flacon aux caractéristiques désirées.

Pour ce faire, l'invention a pour objet un procédé de formage d'un objet en verre creux muni d'une bague et d'une épaule, utilisant une technique « soufflé-soufflé » comprenant une phase d'ébauchage, une phase de transfert et une phase de finition, caractérisé en ce que, lors de la phase de finition, on réalise un enfoncement de la bague dans l'épaule tout en maintenant au moins une partie de la hauteur de la bague.

La solution selon l'invention répond parfaitement au problème posé, tout en écartant tout risque de fragilisation du verre une fois celui-ci figé.

Or, cette solution, d'une simplicité étonnante, est loin d'avoir été évidente. En effet, obtenir une déformation contrôlée de la zone désirée sans pour autant déformer la bague apparaissait être hors de portée de l'homme de l'art, notamment du fait des tolérances sur le diamètre de la bague très contraignantes.

De préférence, on réalise l'enfoncement immédiatement après avoir réalisé le soufflage qui amène le verre en contact avec le moule finisseur. On profite ainsi de la viscosité optimale du verre pour le déformer aisément et de manière très contrôlée.

Selon une caractéristique avantageuse de l'invention, préalablement à l'étape d'enfoncement, on réalise un démoulage uniquement de l'épaule de l'objet. On laisse ainsi la masse du verre nécessaire à la réalisation du corps bien répartie dans le moule finisseur.

Selon une autre caractéristique avantageuse de l'invention, immédiatement après avoir réalisé l'enfoncement de la bague dans l'épaule, on réalise un soufflage à l'intérieur de l'objet. Ce soufflage supplémentaire permet une bonne évacuation des calories tout en ayant très peu d'influence sur la répartition du verre à l'intérieur du moule.

L'invention concerne également un dispositif particulièrement approprié à la mise en oeuvre du procédé selon l'invention.

Ce dispositif de formage d'un objet en verre creux muni d'une bague et d'une épaule qui comprend un moule constitué de deux coquilles principales s'associant entre elles selon un axe vertical et une tête de soufflage reliée à un circuit d'air est remarquable en ce qu'il comprend en outre deux plaquettes coulissantes de part et d'autre du col dudit objet, montés de telle façon que le mouvement de coulissements desdites plaquettes permette le démoulage dudit objet uniquement au niveau de l'épaule et une pièce mobile en translation de la tête de soufflage conformée pour maintenir la bague dudit objet et pour permettre dans sa position basse une déformation dudit objet telle que la bague subit un enfoncement dans l'épaule.

Selon une caractéristique préférée de l'invention, la partie terminale de la pièce mobile a un diamètre intérieur sensiblement égal au diamètre extérieur de la bague de l'objet.

Une telle forme permet de maintenir la bague de l'intérieur, ce qui évite le risque d'avoir un marquage de l'extérieur de la bague, marquage préjudiciable sur le plan esthétique.

Selon une caractéristique supplémentaire de l'invention, la partie terminale de la pièce mobile présente une forme extérieure sensiblement tronconique.

Avantageusement, le déplacement de la pièce mobile dans le bâti est assuré par un moyen pneumatique. Cela permet de contrôler de manière très précise la course de la pièce, gage de la maîtrise de l'enfoncement conforme à l'invention.

Le dispositif de l'invention est particulièrement adapté pour une utilisation en tant que moule finisseur d'une machine IS.

L'invention concerne enfin un objet en verre creux obtenu conformément au procédé précédemment décrit ou à l'aide du dispositif précité.

Cet objet se caractérise par le fait qu'il présente une « contre-dépouille ».

Par « contre-dépouille », il faut comprendre dans le cadre de l'invention que la ligne d'épaule, qui joint le point culminant du corps au point le plus bas de la bague, est située sous l'horizontale (la bague étant dirigée vers le haut et son axe s'étendant selon la verticale).

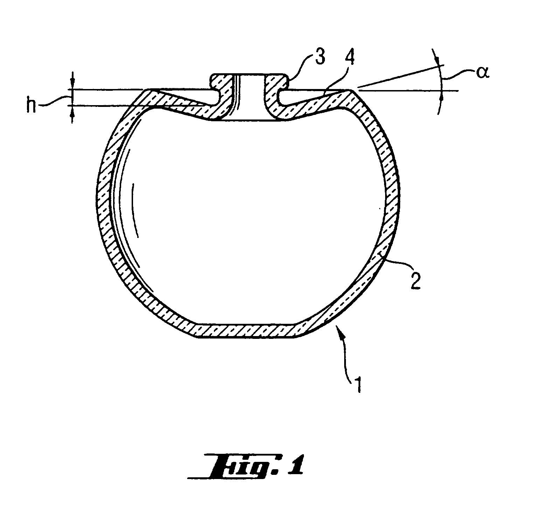

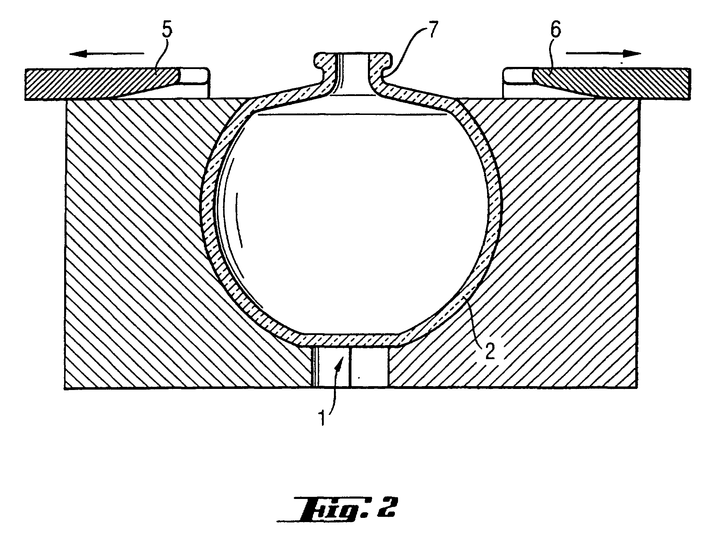

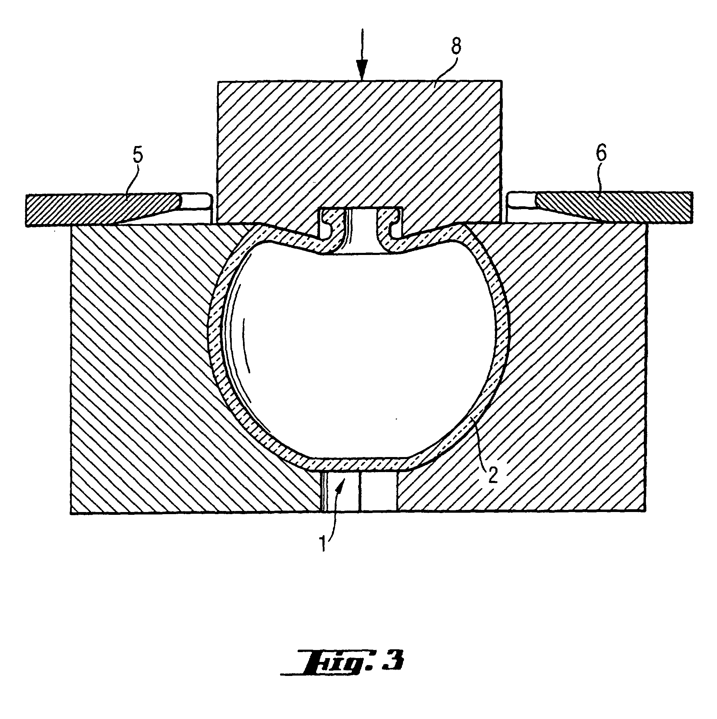

D'autres détails et caractéristiques avantageuses de l'invention apparaîtront ci-après à la lecture de la description détaillée d'un exemple illustratif mais non limitatif faite en référence aux figures 1 à 3 qui représentent, de manière schématique, respectivement :
◆ figure 1 : un flacon obtenu conformément au procédé selon l'invention ;
◆ figures 2 et 3 : deux étapes du procédé selon l'invention mis en oeuvre dans un moule finisseur d'une machine IS.

La figure 1 comporte un corps 2 et une bague 3. Sur cette figure, on voit que la bague 3 a subi un enfoncement dans l'épaule 4 de sorte que le flacon présente une « contre-dépouille ». Cette contre-dépouille est telle que la ligne d'épaule fait un angle a d'environ 5° par rapport à l'horizontale. Le bas de la bague 3 est enfoncé d'une hauteur h d'environ 5 mm par rapport au point culminant du corps 2 du flacon.

Pour réaliser ce flacon 1, on a procédé tel que décrit ci-après.

De manière conventionnelle, l'ébauche arrive dans le moule finisseur d'une machine IS, en étant maintenue par le moule de bague.

Deux plaquettes coulissantes 5, 6 arrivent ensuite de part et d'autre du col 7 et viennent pincer l'ébauche au niveau de celui-ci.

On réalise alors, par l'intermédiaire d'une tête de soufflage non représentée, un soufflage, connu en soi, qui amène le verre en contact avec le moule finisseur.

Dans un laps de temps très faible, les plaquettes coulissantes 5, 6 s'écartent alors du col 7 tel que représenté à la figure 2. En d'autres termes, le mouvement des plaquettes est tel que le démoulage est réalisé uniquement au niveau de son épaule.

Une fois les plaquettes 5, 6 écartées, on réalise un enfoncement de la bague dans l'épaule à l'aide de la pièce 8 qui est une partie mobile de la tête de soufflage, non représentée.

Cet enfoncement est matérialisé par la figure 3, sur laquelle on peut voir que la structure de la pièce 8 est conformée pour maintenir la bague 3.

Comme dit précédemment, une telle structure permet d'obtenir la déformation recherchée dans le cadre de l'invention sans pour autant déformer la bague.

Lorsque la pièce 8 est en position basse, on réalise un soufflage supplémentaire dans le but de faire baisser la température du verre et donc de figer celui-ci.

Une fois l'enfoncement réalisé, on effectue un démoulage du flacon conforme à l'invention de manière connue en soi, selon le plan de joint du moule finisseur.

Bien entendu, il va de soi que de nombreuses modifications peuvent être apportées sous pour autant sortir du cadre de l'invention.

Par exemple, le métal constitutif des plaquettes 5, 6 pourra être amélioré de manière à obtenir une adhésion minimale de celles-ci avec le verre.

## Revendications

1. Procédé de formage d'un objet en verre creux (1) muni d'une bague (3) et d'une épaule (4), utilisant une technique « soufflé-soufflé » comprenant une phase d'ébauchage, une phase de transfert et une phase de finition, **caractérisé en ce que**, lors de la phase de finition, on réalise un enfoncement de la bague (3) dans l'épaule (4) tout en maintenant au moins une partie de la hauteur de la bague (3).

2. Procédé selon la revendication 1, **caractérisé en ce qu'**on réalise l'enfoncement immédiatement après avoir réalisé le soufflage qui amène le verre en contact avec le moule finisseur.

3. Procédé selon la revendication 1 ou la revendication 2, **caractérisé en ce que,** préalablement à l'étape d'enfoncement, on réalise un démoulage uniquement de l'épaule (4) de l'objet.

4. Procédé selon la revendication 1 ou la revendication 2, **caractérisé en ce qu'**immédiatement après avoir réalisé l'enfoncement de la bague (3) dans l'épaule (4), on réalise un soufflage à l'intérieur de l'objet (1).

5. Dispositif de formage d'un objet (1) en verre creux muni d'une bague (3) et d'une épaule (4) comprenant un moule constitué de deux coquilles principales s'associant entre elles selon un axe vertical et une tête de soufflage reliée à un circuit d'air, **caractérisé en ce qu'**il comprend en outre
- deux plaquettes coulissantes (5, 6) de part et d'autre du col (7) dudit objet (1), montés de telle façon que le mouvement de coulissement desdites plaquettes permette le démoulage dudit objet (1) uniquement au niveau de l'épaule (4),
- une pièce mobile en translation (8) de la tête de soufflage conformée pour maintenir la bague dudit objet et pour permettre dans sa position basse une déformation dudit objet telle que la bague (3) subit un enfoncement dans l'épaule (4)

6. Dispositif selon la revendication 5, **caractérisé en ce que** la partie terminale de la pièce mobile (8) a un diamètre intérieur sensiblement égal au diamètre extérieur de la bague de l'objet.

7. Dispositif selon la revendication 5 ou la revendication 6, **caractérisé en ce que** la partie terminale de la pièce mobile (8) présente une forme extérieure sensiblement tronconique.

8. Dispositif selon l'une des revendications 5 à 7, **caractérisé en ce que** le déplacement de la pièce mobile (8) dans le bâti est assuré par un moyen pneumatique.

9. Utilisation du dispositif selon l'une quelconque des revendications 5 à 8 en tant que moule finisseur d'une machine IS.

## Patentansprüche

1. Verfahren zur Formgebung eines mit einem Ring (3) und einer Schulter (4) versehenen Gegenstands (1) aus Hohlglas, in welchem ein "Blas-Blas-Verfahren" angewendet wird, das eine Vorformgebungs-, eine Transfer- und eine Fertigbearbeitungsstufe umfasst, **dadurch gekennzeichnet, dass** in der Fertigbearbeitungsstufe ein Hinunterdrücken des Rings (3) in die Schulter (4) durchgeführt wird, wobei wenigstens ein Teil der Höhe des Rings (3) erhalten bleibt.

2. Verfahren nach Anspruch 1, **dadurch gekennzeichnet, dass** das Hinunterdrücken sofort nachdem der Blasvorgang durchgeführt worden ist, durch welchen das Glas mit der Fertigform in Berührung gebracht wurde, durchgeführt wird.

3. Verfahren nach Anspruch 1 oder 2, **dadurch gekennzeichnet, dass** vor der Stufe des Hinunterdrückens eine Entformung von ausschließlich der Schulter (4) des Gegenstands durchgeführt wird.

4. Verfahren nach Anspruch 1 oder 2, **dadurch gekennzeichnet, dass** unmittelbar nachdem das Hinunterdrücken des Rings (3) in die Schulter (4) durchgeführt worden ist, in dem Gegenstand (1) ein Blasvorgang durchgeführt wird.

5. Vorrichtung zur Formgebung eines mit einem Ring (3) und einer Schulter (4) versehenen Gegenstands (1) aus Hohlglas, welche eine Form, die aus zwei in einer vertikalen Achse miteinander verbundenen Hauptschalen besteht, und einen an eine Luftleitung angeschlossenen Blaskopf umfasst, **dadurch gekennzeichnet, dass** sie außerdem
- auf beiden Seiten des Halses (7) des Gegenstands (1) zwei hin- und hergehende Plättchen (5, 6), die derart angebracht sind, dass die hin- und hergehende Bewegung der Plättchen die Entformung des Gegenstands (1) ausschließlich an der Schulter (4) erlaubt, und
- ein hin- und herbewegliches Teil (8) des Blaskopfes, das gestaltet ist, den Ring des Gegenstands festzuhalten und in seiner unteren Position eine derartige Verformung dieses Gegenstands zu erlauben, dass der Ring (3) in die Schulter (4) hinuntergedrückt wird,
umfasst.

6. Vorrichtung nach Anspruch 5, **dadurch gekennzeichnet, dass** der Innendurchmesser des Endbereichs des beweglichen Teils (8) etwa gleich dem Außendurchmesser des Rings des Gegenstands ist.

7. Vorrichtung nach Anspruch 5 oder 6, **dadurch gekennzeichnet, dass** die äußere Form des Endbereichs des beweglichen Teils (8) im Wesentlichen kegelstumpfförmig ist.

8. Vorrichtung nach einem der Ansprüche 5 bis 7, **dadurch gekennzeichnet, dass** die Bewegung des beweglichen Teils (8) im Rahmen von einem pneumatischen Mittel sichergestellt wird.

9. Verwendung der Vorrichtung nach einem der Ansprüche 5 bis 8 als Fertigform einer IS-Maschine.

## Claims

1. Method for forming a hollow glass object (1) provided with a ring (3) and a shoulder (4), using a "blow and blow" technique comprising a roughing phase, a transfer phase and a finishing phase, **characterized in that**, in the finishing phase, the ring (3) is sunk into the shoulder (4), at least a part of the height of the ring (3) being maintained.

2. Method according to Claim 1, **characterized in that** the sinking takes place immediately following completion of the blowing that brings the glass in contact with the finishing mould.

3. Method according to Claim 1 or Claim 2, **characterized in that**, prior to the sinking stage, only the shoulder (4) of the object is removed from the mould.

4. Method according to Claim 1 or Claim 2, **characterized in that**, immediately after the ring (3) has been sunk into the shoulder (4), blowing is carried out inside the object (1).

5. Apparatus for forming a hollow glass object (1) provided with a ring (3) and a shoulder (4), comprising a mould constituted by two main dies joined together along a vertical axis and a blow head connected to an air circuit, **characterized in that** it additionally comprises
- two sliding plates (5, 6) on either side of the neck (7) of the said object (1), mounted in such a way that the sliding motion of the said plates allows the said object (1) to be removed from the mould only to shoulder level (4),
- a blow head part (8), which part is movable in a translational motion and is configured to hold the ring of the said object and to allow, in its low position, a deformation of the said object such that the ring (3) is caused to sink into the shoulder (4).

6. Apparatus according to Claim 5, **characterized in that** the end portion of the moving part (8) has an internal diameter substantially equal to the external diameter of the ring of the object.

7. Apparatus according to Claim 5 or Claim 6, **characterized in that** the end portion of the moving part (8) has a substantially frustoconical external form.

8. Apparatus according to one of Claims 5 to 7, **characterized in that** the moving part (8) is displaced within the frame by a pneumatic means.

9. Use of the apparatus according to any one of Claims 5 to 8 as a finishing mould of an IS machine.
